# EUROPÄISCHE PATENTSCHRIFT

(11) **EP 1 530 522 B1**
(45) Veröffentlichungstag und Bekanntmachung des Hinweises auf die Patenterteilung: **27.07.2011**
(21) Anmeldenummer: 03792332.3
(22) Anmeldetag: 16.08.2003
(51) Int. Cl.: B60W 30/18, F16H 61/70, B60W 10/06, B60W 10/10

(54) **VERFAHREN ZUM STEUERN EINES ANTRIEBSSTRANGES EINES FAHRZEUGS**
METHOD FOR CONTROLLING THE DRIVE TRAIN OF A VEHICLE
PROCEDE POUR COMMANDER LA CHAINE DE TRANSMISSION D'UN VEHICULE

(30) Priorität: 21.08.2002 DE 10238128
(43) Veröffentlichungstag der Anmeldung: 18.05.2005
(73) Patentinhaber: ZF FRIEDRICHSHAFEN Aktiengesellschaft, 88038 Friedrichshafen (DE)
(72) Erfinder: BAASCH, Detlef, 88048 Friedrichshafen (DE); PELCHEN, Christoph, 88069 Tettnang (DE); SCHMOHL, Barbara, 88048 Friedrichshafen (DE); GAZYAKAN, Ünal, 88045 Friedrichshafen (DE)
(86) Internationale Anmeldenummer: PCT/EP2003/009073
(87) Internationale Veröffentlichungsnummer: WO 2004/018251

(56) Entgegenhaltungen:
- DE-A- 19 722 480
- DE-A- 19 747 262
- GB-A- 2 304 835
- US-A- 4 677 879

## Beschreibung

Die Erfindung betrifft ein Verfahren zum Steuern eines Antriebsstranges eines Fahrzeugs gemäß des im Oberbegriffs des Patentanspruches 1, wie in Stand der Technik (US 46 778 79) dargestellt.

In der Praxis wird ein durch eine Antriebsmaschine erzeugtes Antriebsmoment über eine Getriebeeinheit auf einen Abtrieb eines Fahrzeugs geführt. Dabei stellt die Antriebsmaschine mit der Getriebeeinheit und dem Abtrieb einen sogenannten Antriebsstrang dar, der über eine Steuereinrichtung angesteuert wird.

Um möglichst viele Gangstufen bei möglichst wenig Zahnradpaarungen zur Verfügung stellen zu können, wird die Getriebeeinheit als ein Mehrgruppengetriebe ausgeführt, das wiederum eine Kombination aus mehreren einzelnen in Reihe geschalteten Getriebegruppen darstellt. Bei den Getriebegruppen handelt es sich im allgemeinen um sogenannte Vorschaltgruppen, Hauptgetriebe und Nachschaltgruppen, wobei letztere auch als Rangegruppen bezeichnet werden. Ist ein Hauptgetriebe eines Mehrgruppengetriebes als ein Automatgetriebe ausgeführt, wird ein hoher Schaltkomfort bei vielen Gangstufen bereitgestellt. Ein solches Automatgetriebe kann beispielsweise sechs Gangstufen für Vorwärtsfahrt und einen Rückwärtsgang aufweisen.

Eine Rangegruppe eines Mehrgruppengetriebes ist dadurch charakterisiert, daß eine Eingangsdrehzahl der Rangegruppe immer ins "Langsame" übersetzt wird, wobei gleichzeitig eine hohe Drehmomentsteigerung erfolgt. Um das Durchleiten der hohen Ausgangsmomente einer Rangegruppe durch das Hauptgetriebe zu vermeiden, werden Rangegruppen einem Hauptgetriebe eines Mehrgruppengetriebes vorzugsweise nachgeschaltet. Die Nachschaltgruppe oder Rangegruppe eines Mehrgruppengetriebes wird in der Praxis oft entweder als Vorgelegegetriebegruppe oder als Planetengetriebegruppe ausgeführt, wobei eine Planetengetriebegruppe im Vergleich zu einer Vorgelegegetriebegruppe die kompaktere Alternative darstellt.

Eine Änderung einer Übersetzung einer Rangegruppe erfolgt durch Schaltelemente, mittels welchen zwischen einer ersten Übersetzung ("low") und einer zweiten Übersetzung ("high") umgeschaltet wird. Dabei steht einem Fahrer bei eingelegter erster Übersetzung "low" in der Rangegruppe in Kombination mit dem Hauptgetriebe ein Übersetzungsbereich zur Verfügung, der für einen Betrieb eines Fahrzeuges in einem Gelände mit großen Steigungen und bei niedrigen Fahrzeuggeschwindigkeiten vorteilhaft ist.

Die zweite Übersetzung "high" der Rangegruppe ist weniger verlustbehaftet, so daß bei normalen Geländebedingungen und auch bei höheren Fahrgeschwindigkeiten die zweite Übersetzung "high" bevorzugt in der Rangegruppe eingelegt werden sollte.

Eine Änderung der Übersetzung einer Rangegruppe bewirkt einen hohen Übersetzungssprung in der Rangegruppe und auch der Übersetzung des Mehrgruppengetriebes. Bleibt eine Abtriebsgeschwindigkeit während der Schaltung im wesentlichen gleich, so ist eine Differenzdrehzahl zwischen der Antriebsdrehzahl der Antriebsmaschine vor der Schaltung und der Antriebsdrehzahl der Antriebsmaschine der "neuen" Übersetzung des Mehrgruppengetriebes, bei der ein zuzuschaltendes Schaltelement der Rangegruppe in Bezug auf die Abtriebsdrehzahl synchron ist, groß. Derart hohe Differenzdrehzahlen verursachen jedoch durch längere Anpassungsphasen, in denen ein Antriebsmoment der Antriebsmaschine zum Ausgleich der Differenzdrehzahlen der Antriebsmaschine vierändert wird, lange Schaltzeiten bzw. lange Zugkraftunterbrechungszeiten. Dies ist besonders dann problematisch, wenn eine Antriebsdrehzahl der Antriebsmaschine gesenkt werden muß.

Um die Schaltzeiten zu verkürzen ist dazu übergegangen worden, während der Änderung der Übersetzung der Rangegruppe gleichzeitig eine derartige Schaltung im Hauptgetriebe durchzuführen, so daß eine Übersetzungsänderung des Mehrgruppengetriebes und damit eine Differenzdrehzahl der Antriebsdrehzahl reduziert ist.

Nachteilig dabei ist jedoch, daß das Schubmoment der Antriebsmaschine nicht ausreichend ist, um eine Differenzdrehzahl der Antriebsmaschine derart schnell auszugleichen, daß Schaltungen mit kurzen Zugkraftunterbrechungszeiten durchgeführt werden können, was insbesondere einen Fahrbetrieb bei großen Steigungen stark beeinträchtigt.

Aufgabe der vorliegenden Erfindung ist es daher, ein Verfahren zum Steuern eines Antriebsstranges eines Fahrzeugs zur Verfügung zu stellen, mit dem Übersetzungsänderungen in einer Rangegruppe mit kurzen Zugkraftunterbrechungszeiten durchführbar sind.

Erfindungsgemäß wird diese Aufgabe mit einem Verfahren gemäß den Merkmalen des Patentanspruches 1 gelöst.

Mit dem Verfahren nach der Erfindung, bei dem bei einer Änderung der Übersetzung der Rangegruppe eine Drehzahl der Antriebsmaschine über eine Veränderung einer Übertragungsfähigkeit wenigstens eines Schaltelementes des Automatgetriebes auf eine der einzustellenden Übersetzung des Mehrgruppengetriebes äquivalente Anschlußdrehzahl, bei der das zuzuschaltende Schaltelement der Rangegruppe synchron ist, eingestellt wird, wird eine Zugkraftunterbrechungszeit vorteilhafterweise wesentlich verkürzt.

Dies ergibt sich daraus, daß beispielsweise bei einem Erhöhen einer Übertragungsfähigkeit einer Bremse des Automatgetriebes die Antriebsmaschine über die Bremse bedarfsweise abgebremst werden kann und der Ausgleich der Differenzdrehzahl zwischen der Antriebsdrehzahl vor der Schaltung und zum Zeitpunkt der Schaltung wesentlich schneller erfolgt als es Fall ist, wenn die Differenzdrehzahl bei reduziertem Antriebsmoment der Antriebsmaschine alleine durch das Schubmoment der Antriebsmaschine ausgeglichen wird.

Die mit der Einstellung der Übertragungsfähigkeit wenigstens eines Schaltelementes des Automatgetriebes einhergehende günstige Gegenschaltung in dem Automatgetriebe führt zusätzlich bei einer Änderung der Übersetzung der Rangegruppe auch zur Reduzierung der Differenzdrehzahlen zwischen Drehzahlen der Antriebsmaschine der Ausgangsübersetzung des Mehrgruppengetriebes und der neuen einzustellenden Übersetzung des Mehrgruppengetriebes. Damit werden sehr kurze Zugkraftunterbrechungszeiten erreicht.

In einer vorteilhaften Variante des Verfahrens nach der Erfindung ist es vorgesehen, daß bei einer Übersetzungsänderung der Rangegruppe eine Synchronisierung eines zuzuschaltenden Schaltelementes der Rangegruppe über eine Ansteuerung von Schaltelementen des Automatgetriebes durchgeführt wird. Dadurch kann in vorteilhafter Weise auf mechanische Synchronisierungen in der Rangegruppe - als separate Bauteile oder in Schaltelemente der Rangegruppe integriert - verzichtet werden. Es besteht dann vorteilhafterweise die Möglichkeit, eine Rangegruppe im Vergleich zu aus der Praxis bekannten Mehrgruppengetrieben mit einem konstruktiv wesentlich geringeren Aufwand auszuführen, wodurch die Rangegruppe einen geringeren Bauraumbedarf aufweist.

Des weiteren bietet die Synchronisierung der Rangegruppe bei einer Änderung der Übersetzung der Rangegruppe über das Automatgetriebe den Vorteil, daß Schaltelemente der Rangegruppe als formschlüssige Schaltelemente, vorzugsweise als Klauenkupplungen, ausgeführt werden können, über welche hohe Drehmomente übertragbar sind, die wenig Bauraum beanspruchen und die geringe Herstellkosten verursachen.

Zusätzlich ist von Vorteil, daß sich durch den Entfall der mechanischen Synchronisierungen in der Rangegruppe eine Reduktion von Schleppmomenten geöffneter mechanischer Synchronisierungen der Rangegruppe ergibt und eine Wärmeentwicklung in der Rangegruppe wesentlich herabgesetzt wird. Die Schleppmomente entstehen bei mechanischen Synchronisierungen im wesentlichen durch Flüssigkeitsreibung, die zwischen Reibbelägen reibschlüssiger Kupplungen oder Bremsen durch Öl verursacht wird.

Ein weiterer wesentlicher Vorteil des erfindungsgemäβen Verfahrens ist, daß durch die Synchronisierung der Rangegruppe über das Automatgetriebe eine Zugkraftunterbrechungszeit im Vergleich zu aus der Praxis bekannten Verfahren erheblich reduziert wird, da eine Veränderung einer Antriebsdrehzahl einer Antriebsmaschine bei Bedarf über eine geeignete Ansteuerung von Schaltelementen des Automatgetriebes auf einfache Art und Weise in kurzer Zeit erfolgen kann.

Weitere Vorteile und vorteilhafte Weiterbildungen der Erfindung ergeben sich aus den Patentansprüchen und aus den nachfolgend anhand der Zeichnung prinzipmäßig beschriebenen Ausführungsbeispielen.
Es zeigt:
- Fig.1: eine stark schematisierte Darstellung eines Antriebsstranges mit einer Antriebsmaschine, einem Anfahrelement und einem aus einem Auto- matgetriebe und einer Rangegruppe bestehenden Mehrgruppengetriebe;
- Fig.2: ein schematisch dargestellter Automatgetriebe- wählhebel, welcher eine Offroadposition auf- weist;
- Fig.3: ein Balkendiagramm, in welchem Übersetzungen eines Mehrgruppengetriebes in Abhängigkeit von Übersetzungen eines Automatgetriebes und einer Rangegruppe dargestellt sind;
- Fig.4: ein Diagramm, in welchem für einzelne Gangstu- fen des Mehrgruppengetriebes gemäß Fig. 3 je- weils ein Verlauf einer Fahrzeuggeschwindig- keit über einer Drehzahl einer Antriebsmaschi- ne dargestellt ist;
- Fig.5: mehrere Verläufe von Drehmomenten, welche sich während einer Änderung einer Übersetzung in der Rangegruppe des Mehrgruppengetriebes an Bauteilen des Antriebsstranges gemäß Fig. 1 einstellen;
- Fig.6: ein Drehzahl-Geschwindigkeits-Diagramm mit mehreren Verläufen, welche mit den in Fig. 5 dargestellten Drehmomentverläufen korrespon- dieren;
- Fig.7: ein weiteres Ausführungsbeispiel eines Auto- matgetriebewählhebels, der mit einem Auswahl- schalter zur Vorgabe einer Übersetzung in der Rangegruppe kombiniert ist;
- Fig.8: ein Balkendiagramm, in welchem verschiedene Gangstufen eines über den Automatgetriebewähl- hebel und den Auswahlschalter gemäß Fig. 7 an- steuerbaren Mehrgruppengetriebes dargestellt sind;
- Fig.9: ein Diagramm, in welchem für einzelne Gangstu- fen des Mehrgruppengetriebes gemäß Fig. 8 je- weils ein Verlauf einer Fahrzeuggeschwindig- keit über einer Drehzahl einer Antriebsmaschi- ne dargestellt ist;
- Fig.10: mehrere Verläufe von Drehmomenten, welche sich während einer in Fig. 9 schematisch darge- stellten Änderung der Übersetzung in der Ran- gegruppe des Mehrgruppengetriebes an Bauteilen des Antriebsstranges gemäß Fig. 1 einstellen und
- Fig.11: mehrere Drehzahlverläufe von Bauteilen des Mehrgruppengetriebes, welche mit den Drehmo- mentverläufen gemäß Fig. 10 korrespondieren.

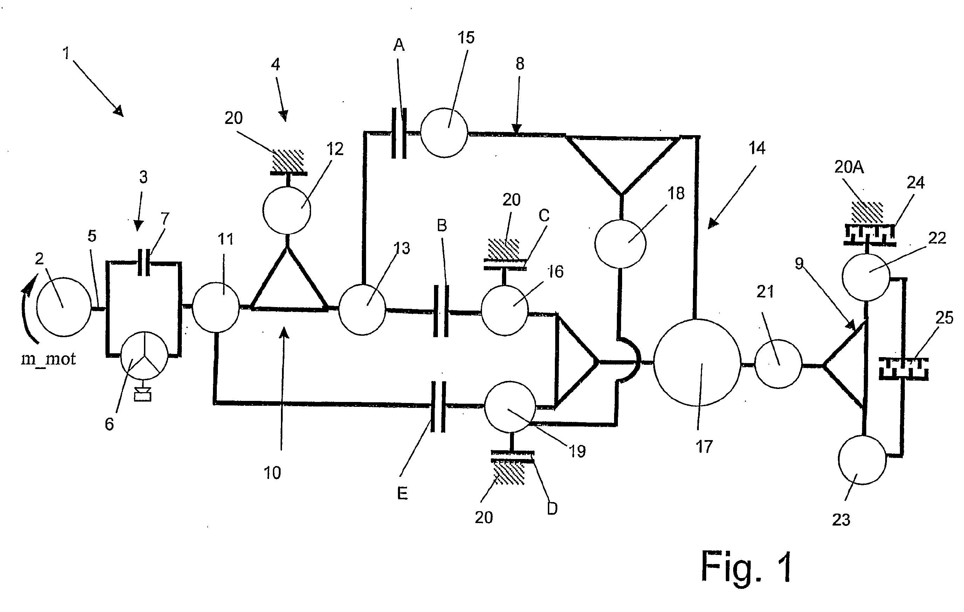

Bezug nehmend auf Fig. 1 ist ein Antriebsstrang 1 eines nicht näher dargestellten Fahrzeuges, insbesondere eines Geländefahrzeugs, stark schematisiert dargestellt. Der Antriebsstrang 1 besteht vorliegend aus einer Antriebsmaschine 2, einem Anfahrelement 3 und einem Mehrgruppengetriebe 4. Die Antriebsmaschine 2 ist als eine Brennkraftmaschine ausgeführt, deren Antriebsmoment m_mot über eine Ausgangswelle 5 an das mit einem hydrodynamischen Drehmomentwandler 6 ausgeführte Anfahrelement 3 gegeben wird. Zusätzlich ist das Anfahrelement 3 mit einer geregelten Wandlerkupplung 7 ausgebildet, mit der der hydrodynamische Drehmomentwandler 6 überbrückbar ist.

Das dem Anfahrelement 3 in Reihe nachgeschaltete Mehrgruppengetriebe 4 ist vorliegend aus einem Automatgetriebe 8 und einer nachgeschalteten Rangegruppe 9 gebildet, wobei das Automatgetriebe 8 das Hauptgetriebe des Mehrgruppengetriebes 4 darstellt.

Die vorliegende Getriebekombination des vorliegenden Mehrgruppengetriebes 4 besteht vorliegend aus dem lastschaltbaren Automatgetriebe 8 und einer klauengeschalteten Getriebegruppe mit Reduktionsstufe bzw. der Rangegruppe 9 mit automatisierter Betätigung. Diese Getriebekombination ist mit einem elektronischen Steuersystem versehen, welches aus einem Automatgetriebesteuergerät, aus einem Rangegruppensteuergerät und einem Antriebsmaschinensteuergerät besteht.

Diese drei nicht näher dargestellten Steuergeräte sind miteinander vernetzt und tauschen die zur Ansteuerung des Antriebsstranges 1 erforderlichen Signale untereinander aus. Durch eine koordinierte Ansteuerung des Automatgetriebes 8 und der Rangegruppe 9 wird die klauengeschaltete Rangegruppe 9 bei einem Übersetzungswechsel in der Rangegruppe 9 über das Automatgetriebe 8 synchronisiert. Die Synchronisierung der Rangegruppe 9 bzw. der jeweils zuzuschaltenden Schaltelemente der Rangegruppe 9 erfolgt durch eine geeignete Ansteuerung der Schaltelemente A bis E des Automatgetriebes 8.

Das Automatgetriebe 8 weist einen ersten Planetenradsatz 10 auf, wobei ein Hohlrad 11 des ersten Planetenradsatzes 10 mit dem Anfahrelement 3 verbunden ist. Mehrere Planeten wälzen sich zwischen dem Hohlrad 11 und einem Sonnenrad 12 des ersten Planetenradsatzes 10 ab und sind auf einem Planetenträger 13 drehbar geführt. Der Planetenträger 13 des ersten Planetenradsatzes 10 ist mit einem Schaltelement A und einem Schaltelement B verbunden, wobei die Schaltelemente A und B als reibschlüssige Lamellenkupplungen ausgeführt sind.

Das Hohlrad 11 des ersten Planetenradsatzes 10 ist mit einem als reibschlüssige Lamellenkupplung ausgebildeten Schaltelement E verbunden. Über die Schaltelemente A, B und E ist jeweils eine Verbindung zwischen dem ersten Planetenradsatz 10 und einem als doppelter Planetenradsatz ausgeführten zweiten Planetenradsatz 14 herstellbar, der im wesentlichen einem Ravigneaux-Planetenradsatz entspricht.

Der zweite Planetenradsatz 14 weist ein erstes Sonnenrad 15 und ein zweites Sonnenrad 16 auf, wobei sich zwischen dem ersten Sonnenrad 15 und einem gemeinsamen Hohlrad 17 sowie dem zweiten Sonnenrad 16 und dem gemeinsamen Hohlrad 17 jeweils mehrere Planeten abwälzen, welche auf einem ersten Planetenträger 18 bzw. einem zweiten Planetenträger 19 des zweiten Planetenradsatzes 14 drehbar gehalten sind.

Das Sonnenrad 12 des ersten Planetenradsatzes 10 ist ortsfest in einem Getriebegehäuse 20 des Automatgetriebes 8 fixiert. Das zweite Sonnenrad 16 des zweiten Planetenradsatzes 14 ist vorzugsweise über ein als reibschlüssige Lamellenbremse ausgeführtes Schaltelement C mit dem Getriebegehäuse 20 verbunden. Darüber hinaus ist der zweite Planetenträger 19 des zweiten Planetenradsatzes 14 über ein als reibschlüssige Lamellenbremse ausgeführtes Schaltelement D mit einem ortsfest in dem Getriebegehäuse 20 angeordneten Bauteil oder direkt mit dem Getriebegehäuse 20 verbindbar.

Das gemeinsame Hohlrad 17 des zweiten Planetenradsatzes ist mit einem Sonnenrad 21 der Rangegruppe 9 verbunden, wobei sich zwischen dem Sonnenrad 21 und einem Hohlrad 22 der Rangegruppe 9 mehrere Planeten abwälzen, die auf einem Planetenträger 23 der Rangegruppe 9 drehbar gelagert sind, der wiederum mit dem Abtrieb verbunden ist.

Zur Darstellung einer ersten Übersetzung "low" der Rangegruppe 9 ist das Hohlrad 22 der Rangegruppe 9 über ein erstes Schaltelement 24 mit einem Getriebegehäuse 20A der Rangegruppe 9 derart verbindbar, daß das Hohlrad 22 nicht drehbar mit dem Getriebegehäuse 20A der Rangegruppe 9 verbunden ist. Eine zweite Übersetzungsstufe "high" der Rangegruppe 9 ist dann eingelegt, wenn das erste Schaltelement 24 geöffnet bzw. ausgerückt ist und ein zwischen dem Hohlrad 22 und dem Planetenträger 23 angeordnetes zweites Schaltelement 25 der Rangegruppe 9 geschlossen ist und das Hohlrad 22 mit dem Planetenträger 23 verbindet.

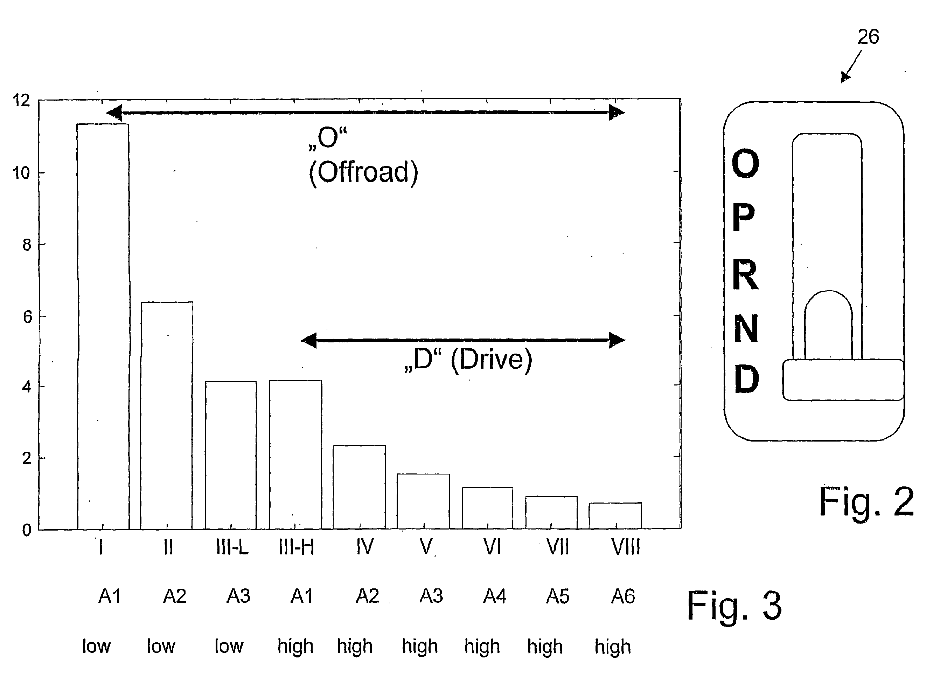

Über einen in Fig. 2 dargestellten Automatgetriebewählhebel 26 sind von einem Fahrer verschiedene Vorgaben wählbar. Dabei sind verschiedene Stellungen "O", "P", "R", "N" und "D" des Automatgetriebewählhebels 26 möglich, die durch eine Rastierung für einen Fahrer erkennbar voneinander getrennt sind. In den Positionen "O" (Offroad) und "D" (Drive) des Automatgetriebewählhebels 26 ist jeweils als Fahrrichtung "Vorwärtsfahrt" des Fahrzeuges angewählt. Die Position "P" (Parken) wird in stehendem Zustand des Fahrzeuges eingelegt, wobei der Abtrieb des Fahrzeugs blockiert ist. Die Position "R" (Rückwärts) wird zum Einlegen eines Rückwärtsganges ausgewählt und in der Position "N" (Neutral) ist der Kraftfluß des Antriebsstranges 1 von der Antriebsmaschine 2 zum Abtrieb des Fahrzeuges im Bereich des Mehrgruppengetriebes 4 unterbrochen.

Die Positionen "O" und "D" bzw. die damit verbundenen Funktionen des Automatgetriebewählhebels 26 für Vorwärtsfahrt unterscheiden sich dahingehend, daß bei ausgewählter Wählhebelposition "D" in der Rangegruppe 9 die Übersetzung "high" eingelegt wird und wie in Fig. 3 dargestellt für einen Fahrbetrieb sechs Gangstufen "III-H", "IV", "V", "VI", "VII" und "VIII" des Mehrgruppengetriebes 4 in Abhängigkeit einer Übersetzung "A1", "A2", "A3", "A4", "A5" oder "A6" des Automatgetriebes 8 zur Verfügung stehen. Die Gesamtübersetzung des Mehrgruppengetriebes 4 nimmt dann Werte in einem Bereich von z. B. 4,17 bis 0,69 an.

Eine Umschaltung zwischen den einzelnen Gangstufen "III-H", "IV", "V", "VI", "VII" und "VIII" des Mehrgruppengetriebes 4 erfolgt jeweils durch eine Änderung der Übersetzung des Automatgetriebes 8, was vorzugsweise entsprechend einem vorgegebenen oder ausgewählten Schaltprogramm erfolgt, das beispielsweise in der Steuereinrichtung des Mehrgruppengetriebes 24 oder des Automatgetriebes 8 abgelegt ist.

Wählt ein Fahrer über den Automatgetriebewählhebel 26 die Position "O" aus, können über das Mehrgruppengetriebe 4 außer den Gangstufen "III-H", "IV", "V", "VI", "VII" und "VIII" drei weitere Gangstufen "I", "II" und "III-L" dargestellt werden. Die Gangstufen "I", "II" und "III-L" stehen dann zur Verfügung, wenn in der Rangegruppe 9 die Übersetzung "low" eingestellt ist und in dem Automatgetriebe 8 jeweils eine erste Übersetzung "A1", eine zweite Übersetzung "A2" oder eine dritte Übersetzung "A3" eingelegt ist. Eine Übersetzung des Mehrgruppengetriebes 4 nimmt dann Werte zwischen z. B. 11,3 und 0,69 an.

Des weiteren wird in der Position "O" des Automatgetriebewählhebels 26 aufgrund einer Betriebsstrategie, die dem jeweils aktivierten Schaltprogramm übergeordnet ist, in einem bestimmten Betriebspunkt des Antriebsstranges automatisch eine Änderung der Übersetzung der Rangegruppe 9 von der Übersetzungsstufe "low" in die Übersetzungsstufe "high" vorgenommen. Gleichzeitig wird in dem Automatgetriebe von der Übersetzung "A3" in die Übersetzung "A1" umgeschaltet. Die Schaltvorgänge des Mehrgruppengetriebes 4 werden über eine geeignete Ansteuerung des Automatgetriebes 8 und der Rangegruppe 9 vollständig automatisiert durchgeführt, wodurch ein Fahrer eines Kraftfahrzeuges entlastet wird.

Des weiteren erfolgt die Auswahl der Übersetzung "low" bzw. "high" der Rangegruppe 9 durch die vorgenannte übergeordnete Betriebsstrategie derart, daß "unsinnige" Übersetzungskombinationen des Automatgetriebes 8 und der Rangegruppe 9 verhindert werden.

Unter "unsinnigen" Übersetzungskombinationen sind Kombinationen der Einzelübersetzungen des Automatgetriebes 8 und der Rangegruppe 9 zu verstehen, bei welchen sehr hohe Eingangsdrehzahlen der Rangegruppe 9 vorliegen. Dies ist beispielsweise dann der Fall, wenn in der Rangegruppe 9 die Übersetzung "low" eingelegt ist und im Automatgetriebe 8 die Übersetzung "A5" eingelegt werden muß, um eine vom Schaltprogramm angeforderte Übersetzung des Mehrgruppengetriebes 4 einzustellen.

Da bei einer Kombination einer "kleinen" Übersetzung des Automatgetriebes 8 mit der Übersetzung "low" der Rangegruppe 9 in letzterer sehr hohe Eingangsdrehzahlen auftreten, die einen niedrigen Wirkungsgrad des Mehrgruppengetriebes 4 bewirken, wird zur Darstellung einer jeweilig angeforderten Übersetzung des Mehrgruppengetriebes 4 die Übersetzung in der Rangegruppe 9 von "low" nach "high" geändert und im Automatgetriebe automatisch eine "größere" Übersetzung zur Darstellung der angeforderten Übersetzung des Mehrgruppengetriebes 4 eingelegt. Dann ist die Eingangsdrehzahl der Rangegruppe 9 reduziert und die Rangegruppe 9 wird in "high" betrieben, womit der Wirkungsgrad des Mehrgruppengetriebes 4 deutlich verbessert wird. Dies führt wiederum zu einer reduzierten Wärmeentwicklung in der Rangegruppe 9 sowie zu einer Senkung des Kraftstoffverbrauches des Fahrzeugs bzw. der Antriebsmaschine 2.

Um eine Umschaltung bzw. Änderung der Übersetzung der Rangegruppe 9 mit einer möglichst geringen Zugkraftunterbrechungszeit durchführen zu können, wird die Änderung während ganz bestimmter Betriebszustände des Mehrgruppengetriebes 4 bzw. des Antriebsstranges 1 vorgenommen.

Fig. 3 zeigt ein Balkendiagramm, wobei eine Höhe der Balken jeweils einen quantitativen Wert der Übersetzung des Mehrgruppengetriebes 4 angibt. Die Übersetzung des Mehrgruppengetriebes 4 ergibt sich jeweils durch die Kombination der Übersetzung des Automatgetriebes 8 und der Übersetzung der Rangegruppe 9 und entspricht jeweils einer der verschiedenen Gangstufen "I", "II", "III-L", "III-H", "IV", "V", "VI", "VII" und "VIII" des Mehrgruppengetriebes 4.

Dabei ist signifikant, daß die Übersetzungen der Gangstufen "III-L" und "III-H" des Mehrgruppengetriebes 4 durch eine geeignete Stufung des Automatgetriebes 8 und der Rangegruppe 9 in etwa gleich sind. Die beiden Gangstufen "III-L" und "III-H" des Mehrgruppengetriebes 4 werden ebenso wie alle anderen Gangstufen des Mehrgruppengetriebes 4 durch eine bestimmte Kombination der Übersetzungen des Automatgetriebes 4 und der Rangegruppe 9 eingestellt. Bei der Gangstufe "III-L" des Mehrgruppengetriebes 4 ist im Automatgetriebe 8 die Übersetzung "A3" und in der Rangegruppe 9 gleichzeitig die Übersetzung "low" eingelegt. Im Unterschied dazu ist bei der Gangstufe "III-H" des Mehrgruppengetriebes 4 in dem Automatgetriebe 8 die Übersetzung "A1" und in der Rangegruppe 9 die Übersetzung "high" eingelegt.

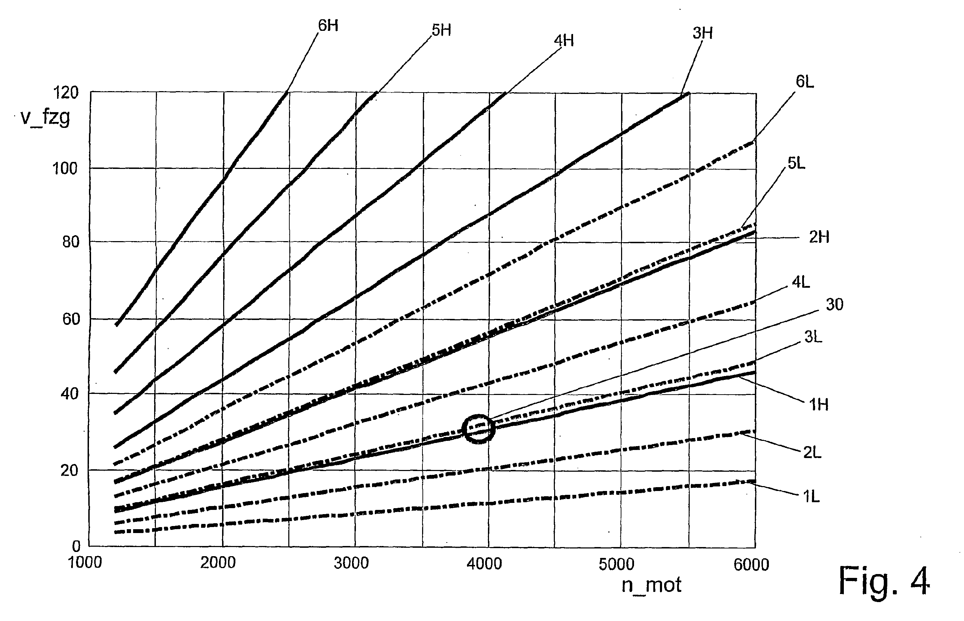

Bei angewählter Position "O" des Automatgetriebewählhebels 26 wird bei Vorliegen eines bestimmten Betriebszustandes in der Rangegruppe 9 von der Übersetzung "low" nach "high" oder in die entgegengesetzte Richtung geschaltet. Dieser Betriebszustand ist in Fig. 4 beispielhaft mit einem Kreis 30 gekennzeichnet.

Dadurch, daß die Übersetzung des Mehrgruppengetriebes 4 in den Gangstufen "III-L" und "III-H" nahezu gleich ist, sind die Verläufe einer Fahrzeuggeschwindigkeit v_fzg, die in Fig. 4 über der Drehzahl n_mot der Antriebsmaschine 2 aufgetragen sind, fast identisch. Eine Drehzahl n_mot der Antriebsmaschine 2 der Gangstufe "III-L" entspricht bei einer bestimmten Fahrzeuggeschwindigkeit v_fzg in etwa der Drehzahl n_mot der Antriebsmaschine 2 der Gangstufe "III-H" oder umgekehrt.

Wird in diesem Betriebszustand des Antriebsstranges 1 die Übersetzung in der Rangegruppe 9 von "low" nach "high" geändert, kann die Übersetzungsänderung mit einer sehr kurzen Zugkraftunterbrechungszeit durchgeführt werden, da die Drehzahl n_mot der Antriebsmaschine 2 während des Wechsels der Übersetzung in der Rangegruppe 9 nahezu gleich bleibt und nur getriebeinterne Drehmassen des Mehrgruppengetriebes 4 miteinander synchronisiert werden müssen.

Fig. 4 zeigt ein Drehzahl-Geschwindigkeits-Diagramm, wobei die dargestellten Linien jeweils die Verläufe der Fahrzeuggeschwindigkeit v_fzg über der Drehzahl n_mot der Antriebsmaschine 2 der verschiedenen Übersetzungen des Mehrgruppengetriebes 4 wiedergeben. Die Übersetzungen des Mehrgruppengetriebes 4 werden jeweils aus der Kombination der Übersetzung des Automatgetriebes 8 und der die zwei Übersetzungsstufen aufweisenden Rangegruppe 9 gebildet.

Die einzelnen Verläufe sind jeweils durch den Buchstaben "A" und einer der Ziffern "1" bis "6" gekennzeichnet, welche zusammen die im Automatgetriebe 8 eingelegte Übersetzung angeben. Darüber hinaus folgt der Ziffer entweder der Buchstabe "H" oder der Buchstabe "L", wobei der Buchstabe "L" die Übersetzung "low" bzw. der Buchstabe "H" die Übersetzung "high" der Rangegruppe 9 repräsentiert.

So ergibt sich beispielsweise aus der Bezeichnung "A2H", daß sich der damit gekennzeichnete Verlauf der Fahrzeuggeschwindigkeit v_fzg bei einer Übersetzung des Mehrgruppengetriebes 4 einstellt, die sich aus der Kombination der zweiten Übersetzung "A2" des Automatgetriebes 8 und der Übersetzung "high" der Rangegruppe 9 ergibt und der Gangstufe "IV" des Mehrgruppengetriebes 4 entspricht.

Aus dem Drehzahl-Geschwindigkeits-Diagramm gemäß Fig. 4 ergibt sich, daß die Verläufe der Fahrzeuggeschwindigkeit v_fzg über der Drehzahl n_mot der Antriebsmaschine 2 dann nahezu identisch sind, wenn im Automatgetriebe die Übersetzung "A3" und gleichzeitig in der Rangegruppe die Übersetzungsstufe "low" eingelegt ist oder wenn in dem Automatgetriebe 8 die Übersetzung "A1" eingelegt ist und in der Rangegruppe 9 gleichzeitig die Übersetzungsstufe "high" geschaltet ist.

Mit dieser Kenntnis zeigt sich in Zusammenhang mit der Darstellung in Fig. 3, daß der Wechsel der Übersetzungsstufe in der Rangegruppe von "low" nach "high" oder von "high" nach "low" dann besonders günstig ist, wenn gleichzeitig in dem Automatgetriebe die Übersetzung ausgehend von der Übersetzung "A3" in die Übersetzung "A1" oder umgekehrt vorgenommen wird. Die Übersetzung des Mehrgruppengetriebes 4 bleibt dabei im wesentlichen gleich, weshalb eine Anschlußdrehzahl der Drehzahl der Antriebsmaschine 2 der angestrebten Übersetzung des Mehrgruppengetriebes 4, bei der die Rangegruppe 9 synchronisiert ist, im wesentlichen gleich der Drehzahl der Antriebsmaschine 2 der aktuell eingelegten Übersetzung des Mehrgruppengetriebes ist.

Das bedeutet, daß beim Umschalten der Übersetzung der Rangegruppe 9 eine Anpassung der Drehzahl der Antriebsmaschine 2 unterbleibt und eine Synchronisierung der zuzuschaltenden Schaltelemente der Rangegruppe 9 und auch der zuzuschaltenden Schaltelemente des Automatgetriebes 8 unabhängig von der Drehzahl der Antriebsmaschine in sehr kurzer Zeit, vorzugsweise in einem Bereich von 0,1 bis 0,2, insbesondere in etwa 0,15 Sekunden, durchgeführt werden kann.

Dies stellt eine erhebliche Verkürzung der Zugkraftunterbrechungszeit im Vergleich zu herkömmlichen aus der Praxis bekannten Schaltstrategien dar, mit welchen lediglich Schaltzeiten von einer halben Sekunde bis hin zu einer Sekunde realisiert werden können, was jedoch eine erhebliche Zugkraftunterbrechung bedeutet.

Die Verläufe "A5L" und "A2H" des Drehzahl-Geschwindigkeits-Diagramms gemäß Fig. 4 weisen ebenfalls einen nahezu identischen Verlauf auf. Die Übersetzungskombination aus der Übersetzung "A5" des Automatgetriebes 8 und der Übersetzung "low" der Rangegruppe 9 zur Darstellung der Übersetzung des Mehrgruppengetriebes 4 wird jedoch aufgrund der vorgenannten negativen Auswirkungen durch die in der Steuereinrichtung abgelegte und die dem jeweilig aktivierten Schaltprogramm übergeordnete Betriebsstrategie nicht ausgewählt.

Es liegt selbstverständlich im Ermessen des Fachmannes, eine Änderung der Übersetzung in der Rangegruppe 9 in Abhängigkeit des jeweilig vorliegenden Anwendungsfalles derart auszuführen, daß der Wechsel zwischen der Übersetzungsstufe "low" und der Übersetzungsstufe "high" der Rangegruppe 9 speziell dann durchgeführt wird, wenn in dem Automatgetriebe 8 die Übersetzung "A5" oder die Übersetzung "A2" eingelegt ist und entsprechend der Übersetzungsänderung in der Rangegruppe 9 im Automatgetriebe 8 von der Übersetzung "A2" in Richtung der Übersetzung "A5" oder umgekehrt entgegengeschaltet wird.

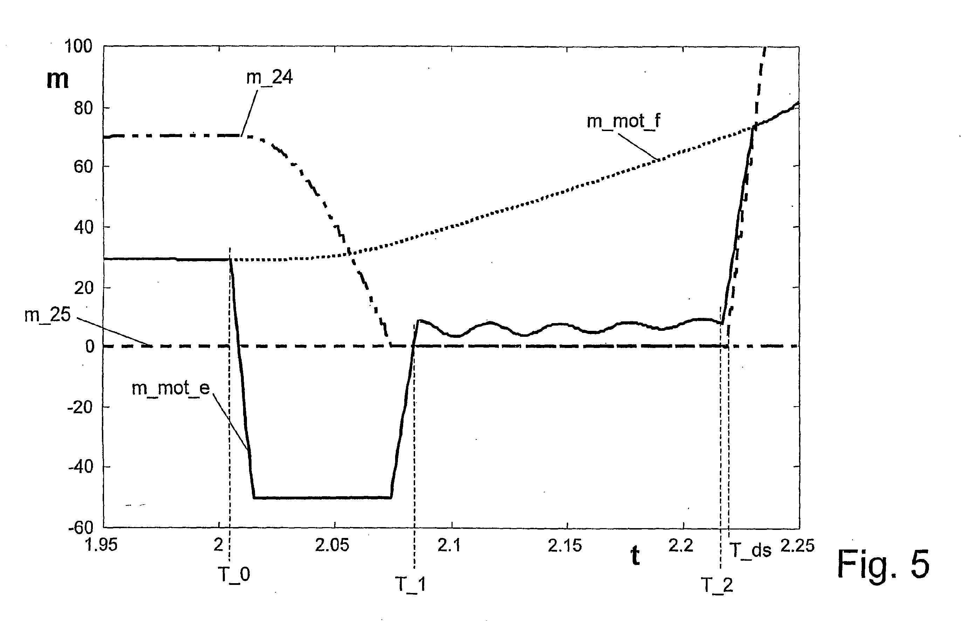

In Fig. 5 sind mehrere Drehmomentverläufe über einer Schaltzeit t während einer Änderung der Übersetzung der Rangegruppe 9 von "low" nach "high" dargestellt. Dabei repräsentiert ein Verlauf m_24 den Verlauf des an dem ersten Schaltelement 24 der Rangegruppe 9 anliegenden Drehmomentes während der Schaltung in der Rangegruppe 9. Ein Verlauf m_25 stellt das an dem zweiten Schaltelement 25 der Rangegruppe 9 anliegende Drehmoment während der Änderung der Übersetzung der Rangegruppe 9 von der Übersetzungsstufe "low" zu der Übersetzungsstufe "high" dar.

Damit korrespondiert ein Verlauf m_mot_e der Antriebsmaschine 2, welcher eine Vorgabe der Steuereinrichtung darstellt und als sogenanntes E-Gas-Moment bezeichnet wird. Das E-Gas-Moment m_mot_e ist das während der Schaltung antriebsmaschinenseitig an dem Mehrgruppengetriebe 4 anliegende Antriebsmoment der Antriebsmaschine, welches von der Steuereinrichtung eingestellt wird. Zusätzlich ist ein Verlauf m_mot_f dargestellt, welcher den Verlauf eines von einem Fahrer angeforderten Antriebsmoments der Antriebsmaschine 2 darstellt, das während der Übersetzungsänderung in der Rangegruppe 9 jedoch nicht berücksichtigt wird.

Wird in Abhängigkeit der in der Steuereinrichtung abgelegten übergeordneten Betriebsstrategie ein Signal ausgegeben, das in der Rangegruppe 9 von der Übersetzungsstufe "low" in die Übersetzungsstufe "high" geschaltet werden soll, wird das Antriebsmoment der Antriebsmaschine 2 entsprechend dem Verlauf m_mot_e des E-Gas-Momentes zur Entlastung des Antriebsstranges 1 solange verändert, bis das als Klauenkupplung ausgeführte erste Schaltelement 24 entsprechend dem Verlauf m_24 vollständig entlastet ist.

Anschließend wird das E-Gas-Moment m_mot_e, welches bis zur vollständigen Entlastung des ersten Schaltelementes 24 konstant gehalten wird, in Richtung eines positiven Wertes verändert. Daran anschließend wird das E-Gas-Moment m_mot_e bis zum endgültigen Durchschalten des ebenfalls als Klauenkupplung ausgeführten zweiten Schaltelementes 25 der Rangegruppe 9 um einen gewissen Wert geregelt, wodurch eine Synchronisierung des zweiten Schaltelementes 25 unterstützt wird.

Ab einem Zeitpunkt T_ds, d. h. dem Durchschaltzeitpunkt des zweiten Schaltelementes 25, steigt das Drehmoment bzw. der Verlauf m_25 des Drehmomentes des zweiten Schaltelementes 25 sprungartig an, wodurch der Kraftfluß zwischen der Antriebsmaschine 2 und dem Abtrieb des Kraftfahrzeuges hergestellt ist. Gleichzeitig erfolgt eine Anpassung des E-Gas-Momentes m_mot_e an das Fahrermoment m_mot_f, wodurch der Umschaltvorgang bzw. die Änderung der Übersetzung in der Rangegruppe 9 beendet ist.

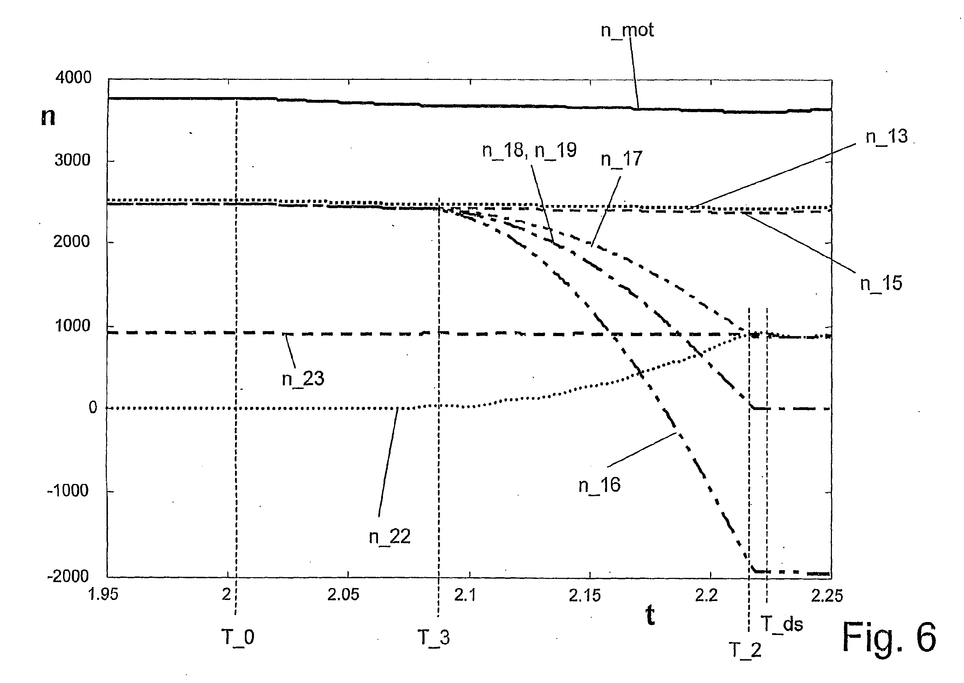

Das in Fig. 6 dargestellte Diagramm, welches mehrere Drehzahlverläufe verschiedener Bauelemente des Antriebsstranges 1 gemäß Fig. 1 während einer Schaltung in der Rangegruppe 9 und dem Automatgetriebe 8 zeigt, stellt die Synchronisierung der Rangegruppe 9 über das Automatgetriebe bzw. dessen Schaltelemente A bis E näher dar. Dabei sind die Drehzahlen n über der Schaltzeit t aufgetragen.

Die verschiedenen Drehzahlverläufe der einzelnen Bauteile des Antriebsstranges 1 sind jeweils durch den Buchstaben n und die Bezugszeichen der Bauteile des Antriebsstranges 1 aus Fig. 1 näher gekennzeichnet. So stellt beispielsweise der Verlauf n_13 den Drehzahlverlauf des Planetenträgers 13 des ersten Planetenradsatzes 10 dar.

Zum Zeitpunkt T_0, an welchem die Schaltphase zur Änderung der Übersetzung der Rangegruppe 9 beginnt, wird das E-Gas-Moment m_mot_e entsprechend dem in Fig. 5 dargestellten Verlauf verändert. Diese von der Steuereinrichtung eingeleitete Maßnahme hat zunächst keinen Einfluß auf die in Fig. 6 dargestellten Drehzahlverläufe n_13, n_15, n_16, n_17, n_18, n_19, n_22, n_23 und den Verlauf der Antriebsdrehzahl n_mot der Antriebsmaschine 2. Mit zunehmender Schaltzeit t wird das Drehmoment m_24 des ersten Schaltelementes 24 der Rangegruppe 9 bis auf Null abgesenkt und das erste Schaltelement 24 der Rangegruppe 9 geöffnet.

Das bedeutet, daß das Hohlrad 23 der Rangegruppe 9 von dem Getriebegehäuse 20A der Rangegruppe 9 gelöst wird und drehbar wird. Ab diesem Zeitpunkt steigt der Drehzahlverlauf n_22 des Hohlrades 22 der Rangegruppe 9 langsam in Richtung der Drehzahl n_23 des Planetenträgers 23 der Rangegruppe 9 an.

Ab einem Zeitpunkt T_3 wird eine Übertragungsfähigkeit zuzuschaltender und abzuschaltender Schaltelemente des Automatgetriebes 8 derart eingestellt, daß die Drehzahl n_16 des zweiten Sonnenrades 16 des zweiten Planetenradsatzes 14, die Drehzahl n_17 des gemeinsamen Hohlrades 17 des zweiten Planetenradsatzes 14, die Drehzahl n_18 des ersten Planetenträgers 18 des zweiten Planetenradsatzes 14 und die Drehzahl n_19 des zweiten Planetenträgers 19 des zweiten Planetenradsatzes 14 reduziert werden. Die Drehzahl n_13 des Planetenträgers 13 des ersten Planetenradsatzes 10, die Drehzahl n_15 des ersten Sonnenrades des zweiten Planetenradsatzes 14 und die Antriebsdrehzahl n_mot der Antriebsmaschine 2 bleiben dabei im wesentlichen nahezu unverändert.

Die Einstellung der Übertragungsfähigkeit der Schaltelemente des Automatgetriebes bewirkt in Kombination mit der Vorgabe des E-Gas-Momentes m_mot_e eine Angleichung der Drehzahl n_22 des Hohlrades 22 der Rangegruppe 9 an die Drehzahl n_23, bis die Drehzahlen n_22 und n_23 identisch sind. In diesem Punkt ist das zweite Schaltelement 25 der Rangegruppe 9 synchronisiert und kann eingerückt bzw. geschlossen werden. Dieser Punkt ist durch den Zeitpunkt T_2 in Fig. 6 näher gekennzeichnet.

Zum Zeitpunkt T_ds wird von einem Positionssensor das Einrücken des zweiten Schaltelementes 25 der Rangegruppe 9 erkannt und das E-Gas-Moment m_mot_e dem Fahrermoment m_mot_f angeglichen.

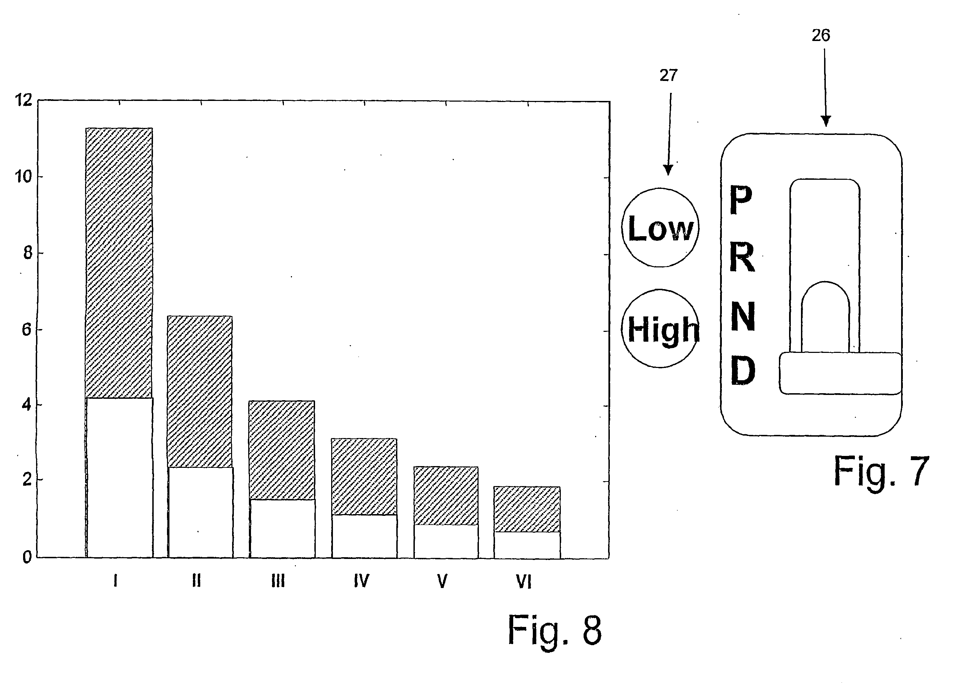

Die Darstellungen der Fig. 7 bis Fig. 11 entsprechen jeweils im wesentlichen den Darstellungen der Fig. 2 bis Fig. 6. Anhand der Fig. 7 bis Fig. 11 wird nachfolgend das Verhalten einzelner Betriebsparameter des Antriebsstranges 1 gemäß Fig. 1 während der Änderung der Übersetzungen des Automatgetriebes 8 und der Rangegruppe 9 beschrieben, wobei eine Ansteuerung des Antriebsstranges 1 entsprechend einer Ausführung des Verfahrens nach der Erfindung erfolgt, welche alternativ zu der bezüglich Fig. 2 bis Fig. 6 beschriebenen Ausführung ist. In der Beschreibung zu Fig. 7 bis Fig. 11 werden für bau- und funktionsgleiche Bauteile der Übersichtlichkeit halber dieselben Bezugszeichen wie bei der Beschreibung zu Fig. 1 bis Fig. 6 verwendet.

Fig. 7 zeigt einen Automatgetriebewählhebel 26 mit den Wählhebelpositionen "D", "N", "R" und "P". Mit dem Automatgetriebewählhebel 26 ist ein Auswahlschalter 27 zur fahrerseitigen Vorgabe der Übersetzungsstufen "low" und "high" in der Rangegruppe 9 kombiniert. Der Auswahlschalter 27 ist mit der Steuereinrichtung des Antriebsstranges 1 derart gekoppelt, daß bei einer Fahrerwunschvorgabe über den Auswahlschalter 27 die jeweils angeforderte Übersetzungsstufe "low" oder "high" in der Rangegruppe 9 eingelegt wird.

In Abhängigkeit der jeweils in der Rangegruppe 9 eingelegten Übersetzung weisen die einzelnen Gangstufen "I", "II", "III", "IV", "V" und "VI" des Mehrgruppengetriebes 4 die in Fig. 8 in einem Balkendiagramm dargestellten Übersetzungen auf. Die gesamte Höhe eines Balkens entspricht jeweils einer Übersetzung der einzelnen Gangstufen "I", "II", "III", "IV", "V" und "VI" des Mehrgruppengetriebes 4, wenn in der Rangegruppe 9 die Übersetzung "low" eingelegt ist. Die einzelnen Gangstufen "I", "II", "III" "IV", "V" und "VI" des Mehrgruppengetriebes 4 werden jeweils durch eine entsprechende Änderung der Übersetzung des Automatgetriebes eingestellt, wobei die jeweilige Übersetzung der Gangstufen "I", "II", "III", "IV", "V" und "VI" des Mehrgruppengetriebes von der in der Rangegruppe eingelegten Übersetzung abhängt.

Ist in der Rangegruppe 9 die Übersetzungsstufe "low" eingelegt, ergeben sich für die einzelnen Gangstufen "I", "II", "III", "IV", "V" und "VI" des Mehrgruppengetriebes 4 die durch die schraffierten Balken wiedergegeben Übersetzungswerte. Das heißt, daß das Mehrgruppengetriebe 4 in der Übersetzungsstufe "low" der Rangegruppe 9 sechs Gänge aufweist, deren Übersetzungen Werte zwischen z. B. 11,3 und 1,87 annehmen. Ist in der Rangegruppe 9 die Übersetzung "high" eingelegt, weist das Mehrgruppengetriebe 4 ebenfalls sechs Gänge auf, deren Übersetzungen Werte zwischen z. B. 4,17 und 0,69 annehmen.

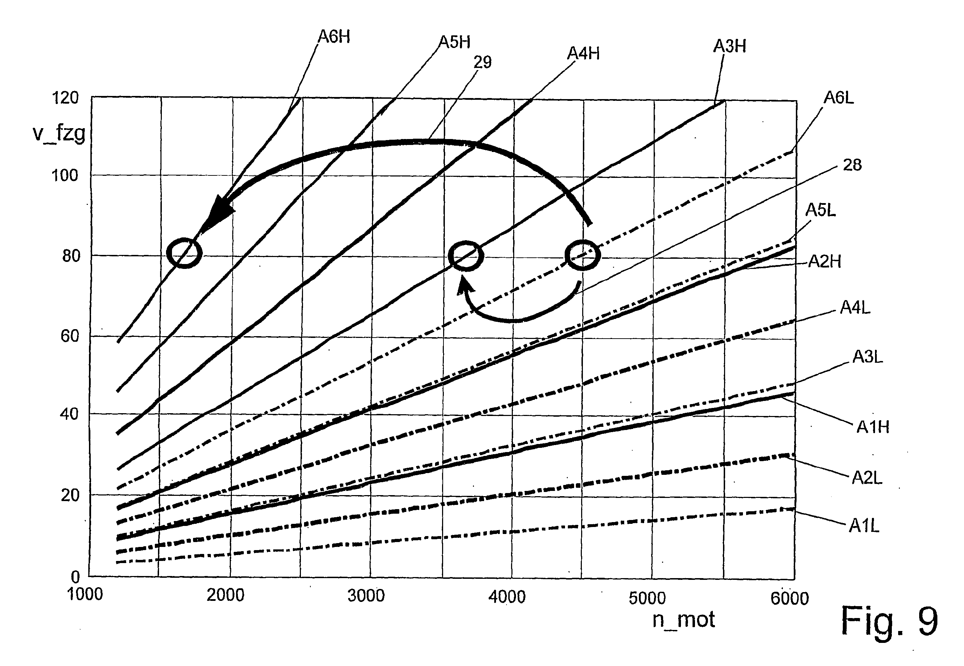

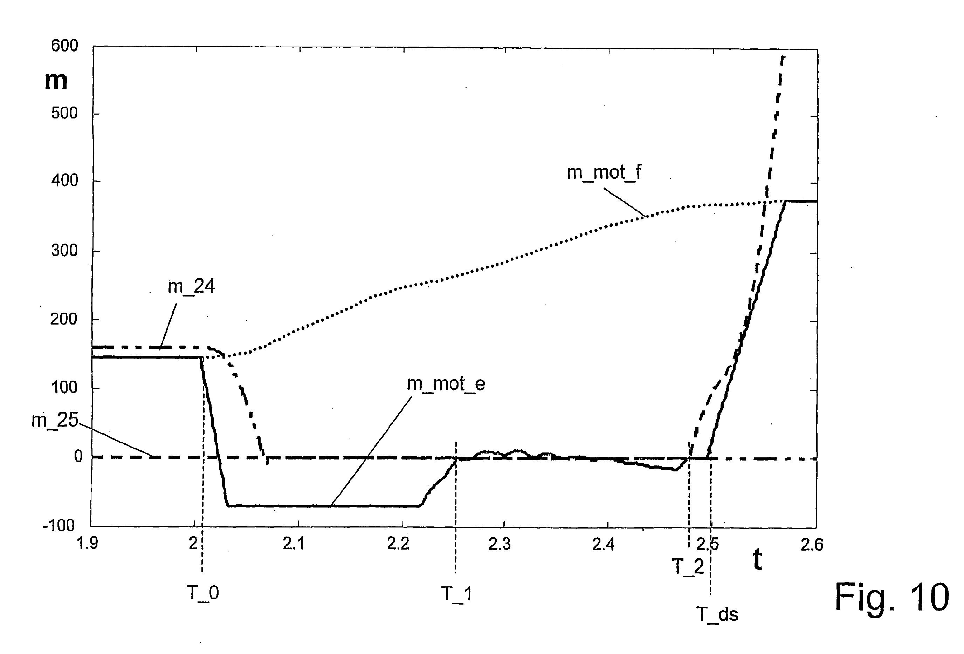

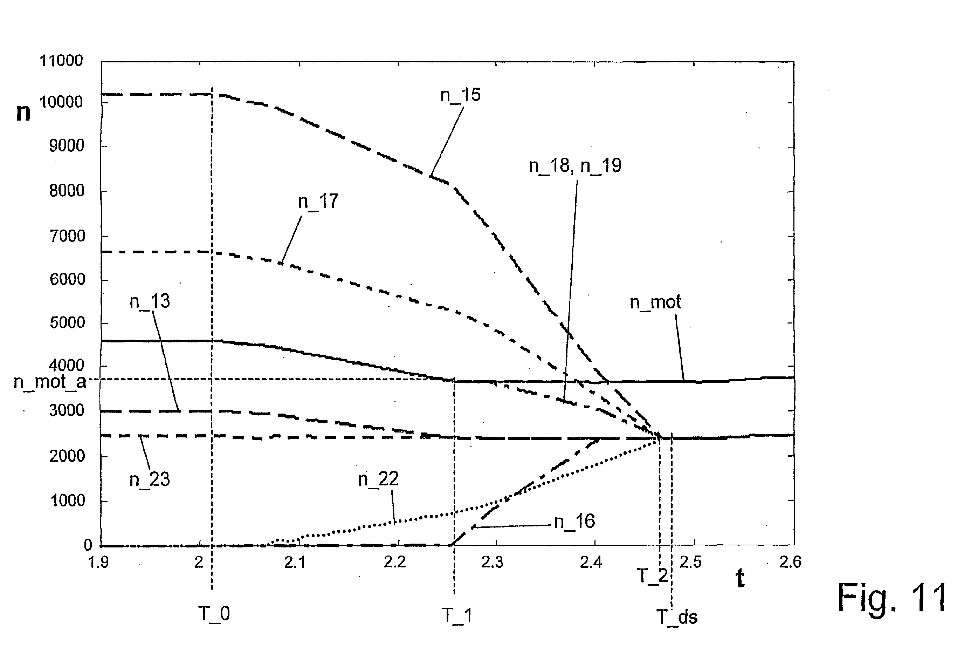

Fig. 9 zeigt ein Drehzahl-Geschwindigkeits-Diagramm, welches prinzipmäßig dem Diagramm gemäß Fig. 4 entspricht. Des weiteren sind in Fig. 10 mehrere Momentenverläufe dargestellt, welche sich an verschiedenen Bauteilen des Antriebsstranges 1 während einer Änderung der Übersetzung in der Rangegruppe 9 von der Übersetzungsstufe "low" zu der Übersetzungsstufe "high" einstellen. Zusätzlich sind in Fig. 11 mehrere Drehzahlverläufe einzelner Bauteile des Antriebsstranges 1 gemäß Fig. 1 während der Übersetzungsänderung in der Rangegruppe 9 über der Schaltzeit t aufgetragen.

Nachfolgend wird anhand der in Fig. 9 bis Fig. 11 dargestellten Diagramme ein Verfahren zum Steuern des Antriebsstranges 1 beschrieben, mittels welchem eine Änderung der Übersetzung der Rangegruppe 9 von der Übersetzungsstufe "low" in die Übersetzungsstufe "high" bei beliebiger Fahrzeuggeschwindigkeit mit sehr kurzen Zugkraftunterbrechungszeiten durchführbar ist.

Bezug nehmend auf Fig. 9 wählt der Fahrer des Fahrzeuges zu einem Zeitpunkt T_0 an dem Auswahlschalter 27 die Übersetzungsstufe "high" in der Rangegruppe 9 aus, in welcher zu diesem Zeitpunkt die Übersetzungsstufe "low" eingelegt ist. Wählt der Fahrer die Übersetzung "low" aus, wenn diese in der Rangegruppe 9 bereits eingelegt ist, wird die Fahrerwunschvorgabe in der Steuereinrichtung des Antriebsstranges 1 ignoriert.

Mit Eingang der Fahrerwunschvorgabe in der Steuereinrichtung des Antriebsstranges 1 wird von der Steuereinrichtung das Antriebsmoment der Antriebsmaschine 2 reduziert, was durch den Verlauf des E-Gas-Momentes m_mot_e in Fig. 10 grafisch wiedergegeben ist.

Durch die Reduzierung des Antriebsmomentes der Antriebsmaschine 2 wird der Antriebsstrang 1 entlastet, wodurch gleichzeitig das an dem ersten Schaltelement 24 der Rangegruppe 9 anliegende Drehmoment m_24 gegen Null geht. Ist das erste Schaltelement 24 der Rangegruppe 9 vollständig entlastet, wird das erste Schaltelement 24 ausgerückt, wodurch in der Rangegruppe 9 der Neutralzustand eingestellt ist. Das als Klauenkupplung ausgeführte erste Schaltelement 24 wird über einen in der Rangegruppe 9 angeordneten Elektromotor geöffnet. Über einen nicht näher dargestellten Positionssensor wird der geöffnete Zustand des ersten Schaltelementes 24 festgestellt. Ein Signal des Positionssensors wird in der Steuereinrichtung verarbeitet, und zuzuschaltende Schaltelemente des Automatgetriebes 8, welche einer der Schaltung in der Rangegruppe entsprechenden Gegenschaltung in dem Automatgetriebe beteiligt sind, werden von der Steuereinrichtung angesteuert.

Die Vorteile des Vorgehens, daß mit der Änderung der Übersetzung der Rangegruppe 9 eine entsprechende Gegenschaltung im Automatgetriebe 8 erfolgt, ohne daß eine Fahrzeuggeschwindigkeit v_fzg verändert wird, sind in Fig. 8 durch die Pfeile 28 und 29 verdeutlicht. Erfolgt bei einer Änderung der Übersetzung der Rangegruppe 9 von "low" nach "high" bei in dem Automatgetriebe 8 eingelegter Übersetzung "A6" eine Gegenschaltung in dem Automatgetriebe 8 in die Übersetzung "A3", weicht eine Anschlußdrehzahl der Antriebsmaschine 2 des neuen Ganges des Mehrgruppengetriebes erheblich weniger von der Drehzahl n_mot der Antriebsmaschine bei der Ausgangsübersetzung "A6L" des Mehrgruppengetriebes 4 ab, als dies ohne Gegenschaltung im Automatgetriebe 8 der Fall ist.

Die Anschlußdrehzahl n_mot der Antriebsmaschine 2, welche sich ohne entsprechende Gegenschaltung im Automatgetriebe 8 einstellen würde, ist durch den weiteren Pfeil 29 in Fig. 8 dargestellt. Dieser große Drehzahlsprung ist für das Fahrverhalten nachteilig, da eine Ausgleichszeit, während der die Drehzahl der Antriebsmaschine auf die neue Drehzahl bzw. die Anschlußdrehzahl eingestellt wird, viel länger ist als bei geringeren Drehzahldifferenzen. Der Nachteil ergibt sich aus der Tatsache, daß der Antriebsstrang während der Ausgleichszeit entlastet ist und die Schaltung eine Zugkraftunterbrechung verursacht, die unter Umständen eine Weiterfahrt an großen Steigungen unmöglich macht.

Nach der Entlastung des Antriebsstranges 1 und somit des ersten Schaltelementes 24 der Rangegruppe 9 wird das Drehmoment der Antriebsmaschine bzw. das E-Gas-Moment m_mot_e konstant gehalten und in einer anschließenden Regelungsphase in der in Fig. 10 schematisch dargestellten Art und Weise derart eingestellt, daß in Abhängigkeit des Drehmomentes m_mot der Antriebsmaschine und auch der Drehzahl n_mot der Antriebsmaschine 2 eine Synchronisierung des zweiten Schaltelementes 25 der Rangegruppe 9 sowie der zur Einstellung der neuen Übersetzung des Automatgetriebes 8 zuzuschaltenden Schaltelemente des Automatgetriebes 8 erfolgt.

Mit den Drehmomentverläufen aus Fig. 10 korrespondieren Drehzahlverläufe der einzelnen Bauelemente des Antriebsstranges 1, die in Fig. 11 dargestellt sind. Zu einem Zeitpunkt T_0, an welchem die Fahrerwunschvorgabe zur Änderung der Übersetzung in der Rangegruppe 9 von der Übersetzung "low" zu der Übersetzung "high" über den Auswahlschalter 27 erfolgt, beginnt die Schaltung in dem Mehrgruppengetriebe entsprechend der Fahrerwunschvorgabe, die eine Änderung der Drehzahlen bzw. eine Änderung der Verläufe der einzelnen Drehzahlen der an der Schaltung beteiligten Bauelemente des Antriebsstranges bewirkt.

Um die Antriebsdrehzahl n_mot der Antriebsmaschine 2 in einer möglichst kurzen Zeit von der Drehzahl des zum Zeitpunkt T_0 der Fahrerwunschvorgabe vorliegenden Ganges des Mehrgruppengetriebes 4 auf die Anschlußdrehzahl des einzustellenden Ganges des Mehrgruppengetriebes 4 zu führen, wird eine Übertragungsfähigkeit der zuzuschaltenden und der abzuschaltenden Schaltelemente des Automatgetriebes 8 jeweils derart eingestellt, daß die Drehzahl n_mot der Antriebsmaschine 2 den in Fig. 11 dargestellten Verlauf aufweist.

Zum Zeitpunkt T_1 hat die Drehzahl n_mot der Antriebsmaschine 2 die Anschlußdrehzahl n_mot_a erreicht, welche zuvor in der Steuereinrichtung in Abhängigkeit der "neuen" Übersetzung des Mehrgruppengetriebes 4 und der aktuellen Fahrzeuggeschwindigkeit v_fzg berechnet wird. Dabei wird die Fahrzeuggeschwindigkeit v_fzg durch im Fahrzeug vorhandene und nicht näher dargestellte ABS-Sensoren oder anderen geeigneten Einrichtungen des Fahrzeugs bestimmt.

Die Antriebsdrehzahl n_mot der Antriebsmaschine 2 ist mit der vorbeschriebenen Vorgehensweise wesentlich schneller auf die Anschlußdrehzahl n_mot_a bringbar, als dies über eine alleinige Einstellung über das E-Gas-Moment der Fall ist. So wird die Antriebsmaschine 2 im vorliegenden Fall vorzugsweise über eine Erhöhung der Übertragungsfähigkeit der zuzuschaltenden Schaltelemente des Automatgetriebes 9 abgebremst. Die zuzuschaltenden Schaltelemente des Automatgetriebes 8 werden in einer sogenannten Schlupfphase betrieben und bremsen die Antriebsmaschine 2 auf die entsprechende Anschlußdrehzahl der Antriebsmaschine in kürzester Zeit ab. Die Ansteuerung der zuzuschaltenden Schaltelemente des Automatgetriebes erfolgt derart, daß über eine gesteuerte Befüllung der reibschlüssigen Schaltelemente eine Übertragungsfähigkeit in der erforderlichen Höhe vorliegt.

Zum Zeitpunkt T_2 sind die zuzuschaltenden Schaltelemente des Automatgetriebes 8 und das zweite Schaltelement 25 der Rangegruppe 9 synchron, so daß die zuzuschaltenden Schaltelemente des Automatgetriebes 8 sowie das zweite Schaltelement 25 geschlossen werden können und der Kraftfluß von der Antriebsmaschine 2 zum Abtrieb des Fahrzeuges wiederhergestellt ist. Gleichzeitig werden die abzuschaltenden Schaltelemente des Automatgetriebes 8 geöffnet und aus dem Kraftfluß des Antriebsstranges 1 genommen.

Über einen weiteren Positionssensor wird das Durchschalten des als Klauenkupplung ausgeführten zweiten Schaltelementes 25 erkannt und das Antriebsmoment der Antriebsmaschine 2, d.h. das E-Gas-Moment m_mot_e, dem angeforderten Antriebsmoment m_mot_f angeglichen, und die Weiterfahrt wird mit entsprechender Antriebsdrehzahl und dem angeforderten Antriebsmoment der Antriebsmaschine 2 durchgeführt.

Der vorbeschriebenen Synchronisierung der an der Schaltung des Mehrgruppengetriebes 4 beteiligten Schaltelemente des Automatgetriebes 8 und der Rangegruppe 9 liegen die in Fig. 11 dargestellten Drehzahlverläufe n_13, n_15, n_16, n_17, n_18, n_19, n_22 und n_23 zugrunde. Der Zeitpunkt T_0 stellt den Beginn der Schaltphase in dem Mehrgruppengetriebe 4 dar. Hierbei wird die Schaltung im Gegensatz zu der Beschreibung zu Fig. 6 nicht automatisiert geschaltet, sondern erfolgt in Abhängigkeit einer Fahrerwunschvorgabe. Mit der Generierung der Fahrerwunschvorgabe zum Einlegen der Übersetzung "low" in der Rangegruppe 9 wird eine Übertragungsfähigkeit der Schaltelemente des Automatgetriebes derart eingestellt, daß die Drehzahlen n_13, n_15, n_18, n_19 und die Antriebsdrehzahl n_mot reduziert werden. Die Drehzahl n_23 des Planetenträgers 23 der Rangegruppe 9 bleibt dabei im wesentlichen unverändert.

Die in Fig. 10 dargestellte Reduzierung des Antriebsmomentes n_mot über die Reduzierung des E-Gas-Momentes m_mot_e führt zu einer Entlastung des ersten Schaltelementes 24 der Rangegruppe 9, so daß dieses kurz nach dem Zeitpunkt T_0 geöffnet werden kann und die Drehzahl n_22 des Hohlrades 22 der Rangegruppe 9 mit zunehmender Schaltzeit t langsam in Richtung der Drehzahl n_23 des Planetenträgers 23 der Rangegruppe 9 ansteigt.

Ab dem Zeitpunkt T_1, an welchem die Antriebsdrehzahl n_mot der Antriebsmaschine 2 die Anschlußdrehzahl n_mot_a erreicht hat, wird die Übertragungsfähigkeit der Schaltelemente des Automatgetriebes 8 derart eingestellt, daß die Drehzahlen n_15, n_17, n_18, n_19 weiter reduziert werden und die Drehzahl n_16 des zweiten Sonnenrades 16 des zweiten Planetenradsatzes 14 in Richtung der Drehzahl n_23 des Planetenträgers 23 der Rangegruppe 9 ansteigt.

Zum Zeitpunkt T_2 sind die Drehzahlen n_15, n_16, n_17, n_18, n_19, und n_22 gleich den Drehzahlen n_13 und n_23, so daß die zuzuschaltenden Schaltelemente des Automatgetriebes 8 sowie das zweite Schaltelement 25 der Rangegruppe 9 synchronisiert sind und geschlossen werden können. Zum Zeitpunkt T_ds wird das Durchschalten des zweiten Schaltelementes 25 der Rangegruppe 9 über einen Positionssensor festgestellt, und der Schaltvorgang des Mehrgruppengetriebes 4 ist beendet.

Die beiden vorbeschriebenen Ausführungsbeispiele weisen den Vorteil auf, daß auf mechanische Synchronisierungen in der Rangegruppe verzichtet werden kann, wodurch sich eine Schleppmomentenreduktion und eine daraus resultierende Reduzierung eines Kraftstoffverbrauches ergibt. Zusätzlich resultieren aus den nicht erforderlichen mechanischen Synchronisierungen Gewichts-, Bauraum- und Kostenvorteile bei der als klauengeschaltete Getriebegruppe ausgeführten Rangegruppe.

Darüber hinaus sind mit dem erfindungsgemäßen Verfahren erhebliche Verkürzungen der Zugkraftunterbrechungszeit während der Änderung der Übersetzung in der Rangegruppe gegenüber herkömmlichen Verfahren erzielbar. Bei dem Ausführungsbeispiel gemäß den Figuren 2 bis 5 erfolgt die Änderung der Übersetzung in der Rangegruppe automatisch, wodurch ein Fahrer vorteilhafterweise entlastet wird.

Mit der Ausführung des erfindungsgemäßen Verfahrens gemäß den Figuren 6 bis 10 ist eine Änderung der Übersetzung in der Rangegruppe mit der Generierung einer Fahrerwunschvorgabe zum Ändern der Übersetzung in der Rangegruppe bei jeder Fahrzeuggeschwindigkeit mit geringer Zugkraftunterbrechungszeit durchführbar, wobei gleichzeitig nach dem Gangwechsel im Mehrgruppengetriebe eine passende Motordrehzahl der neuen Übersetzung des Mehrgruppengetriebes vorliegt, wodurch ein Fahrkomfort und eine Fahrsicherheit, insbesondere an großen Steigungen, erheblich verbessert wird.

### Bezugszeichen

- 1: Antriebsstrang
- 2: Antriebsmaschine
- 3: Anfahrelement
- 4: Mehrgruppengetriebe
- 5: Ausgangswelle
- 6: hydrodynamischer Drehmomentwandler
- 7: geregelte Wandlerkupplung
- 8: Automatgetriebe
- 9: Rangegruppe
- 10: erster Planetenradsatz
- 11: Hohlrad des ersten Planetenradsatzes
- 12: Sonnenrad des ersten Planetenradsatzes
- 13: Planetenträger des ersten Planetenradsatzes
- 14: zweiter Planetenradsatz
- 15: erstes Sonnenrad des zweiten Planetenradsatzes
- 16: zweites Sonnenrad des zweiten Planetenradsatzes
- 17: gemeinsames Hohlrad des zweiten Planetenradsatzes
- 18: erster Planetenträger des zweiten Planetenradsatzes
- 19: zweiter Planetenträger des zweiten Planetenradsat- zes
- 20: Getriebegehäuse
- 20A: Getriebegehäuse der Rangegruppe
- 21: Sonnenrad der Rangegruppe
- 22: Hohlrad der Rangegruppe
- 23: Planetenträger der Rangegruppe
- 24: erstes Schaltelement der Rangegruppe
- 25: zweites Schaltelement der Rangegruppe
- 26: Automatgetriebewählhebel
- 27: Auswahlschalter
- 28: Pfeil
- 29: Pfeil
- 30: Kreis
- A - E: Schaltelemente des Automatgetriebes
- "D": Drive, Vorwärtsfahrt
- "A1"-"A6": Übersetzung des Automatgetriebes
- H: Übersetzung "high" der Rangegruppe
- L: Übersetzung "low" der Rangegruppe
- m: Moment
- m_mot_e: E-Gas-Moment
- m_mot_f: Fahrermoment
- m_24: Verlauf des Drehmomentes des ersten Schaltelementes der Rangegruppe
- m_25: Verlauf des Drehmomentes des zweiten Schaltelemen- tes der Rangegruppe
- n: Drehzahl
- "N": Neutral
- n_mot: Antriebsdrehzahl der Antriebsmaschine
- n_mot_a: Anschlußdrehzahl
- "O": Offroad, Vorwärtsfahrt
- "P": Parken
- "R": Rückwärtsfahrt
- "t": Schaltzeit
- "T": Zeitpunkt
- T_ds: Durchschaltzeitpunkt
- v_fzg: Fahrzeuggeschwindigkeit
- I - III: Übersetzung des Mehrgruppengetriebes
- III-L: Übersetzung des Mehrgruppengetriebes
- III-H: Übersetzung des Mehrgruppengetriebes
- IV - VIII: Übersetzung des Mehrgruppengetriebes

## Patentansprüche

1. Verfahren zum Steuern eines Antriebsstranges (1) eines Fahrzeugs, insbesondere eines Geländefahrzeugs, mit einer Antriebsmaschine (2), mit einem Mehrgruppengetriebe (4), mit einem Abtrieb und mit einer Steuereinrichtung, wobei das Mehrgruppengetriebe (4) wenigstens aus einem Automatgetriebe (8) und einer nachgeschalteten Rangegruppe (9) besteht, und wobei bei einer Änderung der Übersetzung der Rangegruppe (9)
a) der Antriebsstrang (1) durch Änderung des Momentes (m_mot) der Antriebsmaschine (2) entlastet wird,
b) ein abzuschaltendes Schaltelement (24 bzw. 25) der Rangegruppe abgeschaltet wird,
c) ein zuzuschaltendes Schaltelement (24 bzw. 25) der Rangegruppe (9) synchronisiert und zugeschaltet wird und
d) eine Übersetzung des Automatgetriebes (8) derart geändert wird, daß eine Änderung der Übersetzung des Mehrgruppengetriebes (4) kleiner ist als bei einer alleinigen Änderung der Übersetzung der Rangegruppe (9),
**dadurch gekennzeichnet , daß** eine Drehzahl (n_mot) der Antriebsmaschine (2) durch eine Veränderung einer Übertragungsfähigkeit wenigstens eines Schaltelementes des Automatgetriebes (8) auf eine der einzustellenden Übersetzung des Mehrgruppengetriebes (4) äquivalente Anschlußdrehzahl (mot_a), bei der das zuzuschaltende Schaltelement (24 bzw. 25) der Rangegruppe (9) synchron ist, eingestellt wird.

2. Verfahren nach Anspruch 1, **dadurch gekennzeichnet, daß** eine Anforderung eines Fahrers (m_mot_f) zur Änderung des Drehmomentes (m_mot) der Antriebsmaschine (2) während der Änderung der Übersetzung der Rangegruppe (9) erst mit Abschluß der Übersetzungsänderung berücksichtigt wird, wobei die Änderung des Antriebsmomentes (m_mot) der Antriebsmaschine (2) zur Entlastung des Antriebsstranges (1) von der Steuereinrichtung gesteuert wird.

3. Verfahren nach Anspruch 2, **dadurch gekennzeichnet, daß** nach der Änderung der Übersetzung der Rangegruppe (9) die Anforderung des Fahrers (m_mot_f) zur Änderung des Drehmomentes (m_mot) der Antriebsmaschine (2) durchgeführt wird.

4. Verfahren nach einem der Ansprüche 1 bis 3, **dadurch gekennzeichnet , daß** zur Einstellung der Anschlußdrehzahl (n_mot_a) der Antriebsmaschine (2) eine Übertragungsfähigkeit von abzuschaltenden Schaltelementen des Automatgetriebes (8) reduziert wird und eine Übertragungsfähigkeit von zuzuschaltenden Schaltelementen des Automatgetriebes (8) erhöht wird.

5. Verfahren nach einem der Ansprüche 1 bis 4, **dadurch gekennzeichnet , daß** bei Vorliegen der Anschlußdrehzahl (n_mot_a) der Antriebsmaschine (2) eine Übertragungsfähigkeit der abzuschaltenden Schaltelemente des Automatgetriebes (8) aufgehoben wird, während die zuzuschaltenden Schaltelemente des Automatgetriebes (8) in einem Schlupfbetrieb gehalten werden.

6. Verfahren nach einem der Ansprüche 1 bis 5, **dadurch gekennzeichnet , daß** die zuzuschaltenden Schaltelemente des Automatgetriebes (8) und das zuzuschaltende Schaltelement (24 bzw. 25) der Rangegruppe (9) in synchronem Zustand vollständig geschlossen werden.

7. Verfahren nach einem der Ansprüche 1 bis 6, **dadurch gekennzeichnet , daß** die Änderung der Übersetzung der Rangegruppe (9) und die damit einhergehende Änderung der Übersetzung des Automatgetriebes (8) bei Vorliegen eines definierten Betriebszustandes automatisch erfolgt.

8. Verfahren nach einem der Ansprüche 1 bis 7, **dadurch gekennzeichnet, daß** die Änderung der Übersetzung der Rangegruppe (9) und die damit einhergehende Änderung der Übersetzung des Automatgetriebes (8) bei Vorliegen der Fahrerwunschvorgabe durchgeführt wird.

9. Verfahren nach einem der Ansprüche 1 bis 8, **dadurch gekennzeichnet , daß** die Steuereinrichtung ein Antriebsmaschinensteuergerät, ein Automatgetriebesteuergerät und ein Rangegruppensteuergerät hat, welche miteinander verbunden sind und Signale austauschen, oder wobei das Automatgetriebesteuergerät und das Rangegruppensteuergerät in einem gemeinsamen Steuergerät zusammengefaßt sind.

## Claims

1. Method for controlling a drive train (1) of a vehicle, in particular of an off-road vehicle, having a drive machine (2), having a multi-group gearbox (4), having a drive and having a control device, wherein the multi-group gearbox (4) is composed of at least one automatic transmission (8) and a range group (9) arranged downstream, and wherein, when the transmission ratio of the range group (9) changes,
a) the drive train (1) is relieved of loading by changing the torque (m_mot) of the drive machine (2),
b) a gear shifting element (24 or 25), which is to be disengaged, of the range group is disengaged,
c) a gear shifting element (24 or 25), which is to be engaged, of the range group (9) is synchronized and engaged,
and
d) a transmission ratio of the automatic transmission (8) is changed in such a way that a change in the transmission ratio of the multi-group gearbox (4) is smaller than when only the transmission ratio of the range group (9) is changed,
**characterized in that**, by changing a transmission capability of at least one gear shifting element of the automatic transmission (8), a rotation speed (n_mot) of the drive machine (2) is set to a connecting rotational speed (mot_a) which is equivalent to the transmission ratio of the multi-group gearbox (4) which is to be set and at which that gear shifting element (24 or 25) of the range group (9) which is to be engaged is synchronous.

2. Method according to Claim 1, **characterized in that** a request by a driver (m_mot_f) to change the torque (m_mot) of the drive machine (2) during the changing of the transmission ratio of the range group (9) is not taken into account until the changing of the transmission ratio has ended, wherein the changing of the drive torque (m mot) of the drive machine (2) in order to relieve the drive train (1) of loading is controlled by the control device.

3. Method according to Claim 2, **characterized in that**, after the transmission ratio of the range group (9) has changed, the request by the driver (m_mot_f) to change the torque (m_mot) of the drive machine (2) is carried out.

4. Method according to one of Claims 1 to 3, **characterized in that**, in order to set the connecting rotational speed (n_mot_a) of the drive machine (2), a transmission capability of gear shifting elements of the automatic transmission (8) which are to be disengaged is reduced, and a transmission capability of gear shifting elements of the automatic transmission (8) which are to be engaged is increased.

5. Method according to one of Claims 1 to 4, **characterized in that**, when the connecting rotational speed (n_mot_a) of the drive machine (2) is present, a transmission capability of the gear shifting elements of the automatic transmission (8) which are to be disengaged is cancelled, while the gear shifting elements of the automatic transmission (8) which are to be engaged are held in a slip mode.

6. Method according to one of Claims 1 to 5, **characterized in that** the gear shifting elements of the automatic transmission (8) which are to be engaged and that gear shifting element (24 or 25) of the range group (9) which is to be engaged are completely closed in the synchronous state.

7. Method according to one of Claims 1 to 6, **characterized in that** the changing of the transmission ratio of the range group (9) and the associated changing of the transmission ratio of the automatic transmission (8) take place automatically when a defined operating state is present.

8. Method according to one of Claims 1 to 7, **characterized in that** the changing of the transmission ratio of the range group (9) and the associated changing of the transmission ratio of the automatic transmission (8) are carried out when the driver's request specification is present.

9. Method according to one of Claims 1 to 8, **characterized in that** the control device has a drive machine control unit, an automatic transmission control unit and a range group control unit which are connected to one another and exchange signals, or wherein the automatic transmission control unit and the range group control unit are combined in a common control unit.

## Revendications

1. Procédé pour commander une chaîne de transmission (1) de véhicule, notamment de véhicule tout-terrain, avec un moteur d'entraînement (2), avec une boîte de vitesses à plusieurs groupes (4), avec un entraînement de sortie et avec un dispositif de commande, la boîte de vitesses à plusieurs groupes (4) se composant d'au moins une boîte de vitesses automatique (8) et d'un sous-groupe (9) branché en aval, et dans lequel en cas de modification du rapport de multiplication du sous-groupe (9) :
a) la chaîne de transmission (1) est déchargée par modification du couple (m_mot) du moteur d'entraînement (2) ;
b) un élément de changement de vitesse (24 et/ou 25) à débrayer du sous-groupe étant débrayé ;
c) un élément de changement de vitesse (24 et/ou 25) à embrayer du sous-groupe (9) est synchronisé et embrayé ; et
d) un rapport de multiplication de la boîte de vitesses automatique (8) est modifié de telle façon qu'une modification du rapport de multiplication de la boîte de vitesses à plusieurs groupes (4) est moins importante qu'une modification seule du rapport de multiplication du sous-groupe (9) ;
**caractérisé en ce qu'**une vitesse de rotation (n_mot) du moteur d'entraînement (2) est réglée par le biais d'une modification d'une capacité de transmission d'au moins un élément de changement de vitesse de la boîte de vitesses automatique (8) sur une vitesse de rotation d'accouplement (mot_a) équivalente du rapport de multiplication de la boîte de vitesses à plusieurs groupes (4) à régler et à laquelle l'élément de changement de vitesse (24 et/ou 25) à embrayer du sous-groupe (9) est synchrone.

2. Procédé selon la revendication 1, **caractérisé en ce qu'**une demande d'un conducteur (m_mot_f) de modifier le couple de rotation (m_mot) du moteur d'entraînement (2) pendant la modification du rapport de multiplication du sous-groupe (9) n'est prise en compte qu'à la fin de la modification du rapport de multiplication, la modification du couple d'entraînement (m_mot) du moteur d'entraînement (2) étant commandée de façon à décharger la chaîne de transmission (1) du dispositif de commande.

3. Procédé selon la revendication 2, **caractérisé en ce que** la demande du conducteur (m_mot_f) de modifier le couple de rotation (m_mot) du moteur d'entraînement (2) est exécutée après la modification du rapport de multiplication du sous-groupe (9).

4. Procédé selon l'une quelconque des revendications 1 à 3, **caractérisé en ce qu'**une capacité de transmission des éléments de changement de vitesse à débrayer de la boîte de vitesses automatique (8) est réduite pour régler la vitesse de rotation d'accouplement (n_mot_a) du moteur d'entraînement (2) et **en ce qu'**une capacité de transmission des éléments de changement de vitesse à embrayer de la boîte de vitesses automatique (8) est accrue.

5. Procédé selon l'une quelconque des revendications 1 à 4, **caractérisé en ce que** lorsque la vitesse de rotation d'accouplement (n_mot_a) du moteur d'entraînement (2) est passée, une capacité de transmission des éléments de changement de vitesse à débrayer de la boîte de vitesses automatique (8) est supprimée tandis que les éléments de changement de vitesse à embrayer de la boîte de vitesses automatique (8) sont maintenus en fonctionnement glissant.

6. Procédé selon l'une quelconque des revendications 1 à 5, **caractérisé en ce que** les éléments de changement de vitesse à embrayer de la boîte de vitesses automatique (8) et l'élément de changement de vitesse (24 et/ou 25) à embrayer du sous-groupe (9) sont entièrement fermés à l'état synchrone.

7. Procédé selon l'une quelconque des revendications 1 à 6, **caractérisé en ce que** la modification du rapport de multiplication du sous-groupe (9) et la modification en découlant du rapport de multiplication de la boîte de vitesses automatique (8) se produit de façon automatique en présence d'un état de fonctionnement défini.

8. Procédé selon l'une quelconque des revendications 1 à 7, **caractérisé en ce que** la modification du rapport de multiplication du sous-groupe (9) et la modification en découlant du rapport de multiplication de la boîte de vitesses automatique (8) est réalisée en présence d'une instruction de préférence du conducteur.

9. Procédé selon l'une quelconque des revendications 1 à 8, **caractérisé en ce que** le dispositif de commande a un appareil de commande du moteur d'entraînement, un appareil de commande de boîte de vitesses automatique et un appareil de commande de sous-groupe reliés entre eux et échangeant des signaux, ou l'appareil de commande de la boîte de vitesses automatique et l'appareil de commande du sous-groupe étant regroupés en un seul appareil de commande commun.
